# EUROPÄISCHE PATENTSCHRIFT

(11) **EP 0 824 306 B1**
(45) Veröffentlichungstag und Bekanntmachung des Hinweises auf die Patenterteilung: **08.12.1999**
(21) Anmeldenummer: 96914150.6
(22) Anmeldetag: 29.04.1996
(51) Int. Cl.: A01G 25/06

(54) **VERFAHREN UND QUERSCHNITTSVERFORMTER SCHLAUCH FÜR DIE GLEICHMÄSSIG DOSIERTE ABGABE UND AUFNAHME VON FLÜSSIGKEITEN, GASEN UND FLUIDEN**
METHOD FOR THE DELIVERY OR RECEPTION OF UNIFORM QUANTITIES OF LIQUIDS OR GASES, AND HOSE WITH A SHAPED CROSS-SECTION FOR USE IN THE METHOD
PROCEDE ET TUYAU A SECTION FA ONNEE POUR L'APPORT ET LA RECEPTION DE DOSES REGULIERES DE LIQUIDES, GAZ ET FLUIDES

(30) Priorität: 11.05.1995 DE 19517200; 04.03.1996 DE 19608230
(43) Veröffentlichungstag der Anmeldung: 25.02.1998
(73) Patentinhaber: Weth, Nikolaus, 76889 Schweigen-Rechtenbach (DE)
(72) Erfinder: Weth, Nikolaus, 76889 Schweigen-Rechtenbach (DE)
(74) Vertreter: Lewald, Dietrich, Dipl.-Ing.
(86) Internationale Anmeldenummer: EP9601787
(87) Internationale Veröffentlichungsnummer: WO9635325

(56) Entgegenhaltungen:
- WO-A-86/06578
- DE-A- 4 025 946
- DE-A- 4 122 388
- DE-U- 9 405 221
- US-A- 5 002 429
- US-A- 5 129 758

## Beschreibung

Die Erfindung betrifft ein Schlauchsystem bestehend aus einem elastischen Schlauch von gegenüber den geometrischen Grundformen Kreis, Rechteck ... verformtem Querschnitt, zur gleichmäßigen Abgabe von Flüssigkeiten oder Gasen, über längs des Schlauches und über große Schlauchlängen angeordnete Öffnungen.

Die Erfindung hat auch ein Verfahren zur Abgabe oder Aufnahme von Flüssigkeit wie das Schlauchsystem zum Gegenstand.

Bei solchen querschnittsverformten Schläuchen (siehe z.B. DE-U-94 04 221.2) mit entsprechend dem Funktionsprinzip angepaßten Wandstärken für die gleichmäßig dosierte Ausbringung oder das gleichmäßige Absaugen von Flüssigkeiten oder Gasen über große Längen mit längs in bestimmten Abständen angeordneten Austrittsstellen kommen die Kategorien "Entlüften-Belüften und "Entwässern-Bewässern" mit den speziellen Kriterien "gleichmäßige großflächige Behandlung" in Frage.

Der Erfindung liegt die Aufgabe zugrunde, bei über große Längen eingebrachten Schläuchen oder dergleichen darauf hinzuwirken, daß diese aufgrund der auf sie wirkenden großen Verlegekräfte nicht ihre Funktion verlieren.

Erreicht wird dies bei einem Schlauchsystem der eingangs genannten Art, bei dem der Schlauch auch gegebenenfalls zur Aufnahme von Flüssigkeiten oder Gasen dienen kann durch die zusätzliche Anordnung eines äußeren zugfesten Einzugsrohrs nicht-geschlossenen Querschnitts, das insbesondere offen entlang einer Mantellinie ist, für die Unterbringung des elastischen Schlauches und mit einer teilweisen, elastischen Armierung des Schlauches, insbesondere im Bereich der öffnungsfreien Wandungen.

Gelöst wird diese Aufgabe alternativ auch mit Innenschlauch ohne Armierung, der allerdings nur für die Funktion Abgabe nicht für die Funktion Abgabe und Aufnahme wie vorstehend vorbereitet ist.

Eine weitere alternative Lösung ist zu sehen in einem Schlauchsystem bestehend aus einem elastischen Schlauch von quadratischem Querschnitt, zur gleichmäßigen Aufnahme oder Abgabe von Flüssigkeiten oder Gasen, über längs des Schlauches und über große Schlauchlängen angeordnete Öffnungen und gegebenenfalls zur Aufnahme von Flüssigkeiten oder Gasen und mit einer teilweisen, elastischen Armierung des Schlauches, insbesondere im Bereich der öffnungsfreien Wandungen.

Hierbei handelt es sich um einen Schlauch vorwiegend für Aufnahme aber auch für Abgabe.

Schließlich kann man auch ein Schlauchsystem verwenden, bestehend aus einem elastischen Schlauch von gegenüber den geometrischen Grundformen Kreis, Rechteck ... verformtem Querschnitt, zur gleichmäßigen Abgabe von Flüssigkeiten oder Gasen, über längs des Schlauches und über große Schlauchlängen angeordnete Öffnungen und mit einer teilweisen, elastischen Armierung des Schlauches, insbesondere im Bereich der öffnungsfreien Wandungen.

Die Ausgangsquerschnitte des elastischen Schlauchs im Ruhezustand können auch tailliert ausgebildet sein.

Vorzugsweise tragen einige Wandungen diese im Ruhezustand zylindrischen Lochungen einer Elastizität derart, daß diese Lochungen bei Verformungen aufgrund von Überdruck/Unterdruck im Durchlaßquerschnitt deutlich abnehmen.

Ein hochelastischer säure-, laugenfester, temperaturangepaßter Schlauch kann verwendet werden.

Die Lochungskanäle können auch konisch mit je nach Anwendungsfall von innen nach außen zunehmendem oder abnehmendem Querschnitt ausgebildet sein.

Die Erfindung betrifft auch ein Verfahren zur Abgabe oder Aufnahme von Flüssigkeiten, Gasen oder Fluiden in die oder aus der Umgebung, insbesondere des Erdbodens oder zur Aufnahme von Wasseroberflächen, über diskrete in Längsrichtung verteilte Öffnungen, insbesondere auch zur "in situ"-Behandlung, wobei gegebenenfalls ein Filtermaterial vorgesehen ist, das verhindert, daß Feinstpartikel an die Aufnahmestellen gelangen und ein Festsaugen des Innenschlauchs am Einzugsrohr verhindert und der Innenschlauch mit dem Filtermaterial in ein längs einer Mantellinie offenes Einzugsrohr und das gesamte Schlauchsystem zur in situ-Behandlung in den Erdboden eingebracht wird.

Zwischen der äußeren Umgebung und den Öffnungen kann also ein längs einer Erzeugenden offenes Schutzgebilde zum Schutz der eigentlichen Aufnahme/Abnahme vorgesehen sein.

Das Verfahren kann dadurch weitergebildet werden, daß Austrittsöffnungen abhängig von steigendem Überdruck (Abgabe) und Unterdruck (Aufnahme) durch das Betriebsmedium zur Einstellung gleicher Mengen zunehmend durch Krümmungsänderung eines elastischen die Öffnungen tragenden Gebildes verformt bzw. verlegt werden.

Das Verfahren läßt sich besonders günstig dann durchführen, wenn die Öffnungen in einem gegen Zugspannungen resistenten Gebilde untergebracht sind.

Weitere Merkmale der Erfindung sind den Unteransprüche zu entnehmen.

Es wird nicht verkannt, daß elastische aus Kautschuk, Kunst stoff, PVC, Gummi oder Thermoplasten bestehende Schläuche in ausgebeulter Form mit zylindrischen Lochungen zur Abgabe von Flüssigkeit und Reinigung mit Gas, meist als Sickerschlauch, an sich bekannt sind.

Die **WO-A-9606578** zeigt ein Innenrohr und ein Außenrohr mit dazwischen befindlicher Faserstoffschicht. Das Material des Hüllrohres sowie das Material des Zuleitungsrohres soll in die Faserstoffschicht eindringen. Es soll eine innige Verbindung zwischen Faserstoffschicht und Hüllrohr gemäß Seite 4 oben geschaffen werden. Die Faserstoffschicht soll unter dem Einfluß des Wasserdrucks im Zuleitungsrohr durch den Längsschlitz im Hüllrohr nach außen gedrängt werden. Das Hüllrohr kann verschweißt, vernetzt, verklebt oder aufgeschrumpft sein.

Es soll also etwas ganz anderes als nach der Erfindung, es sollen nämlich Bewässerungsrohre, hergestellt werden, die über Steckmuffen oder T-Stücke einfach dicht zusammengesteckt werden.

Ein elastischer Schlauch ist dort nicht vorhanden. Der Einsatz für Gase ist nicht vorgesehen. Es gibt keinen unsymmetrischen Querschnitt. Die Sache ist bei der Aufnahme auch nicht für Gase vorgesehen. Das Ganze ist nicht zugfest. Ein Druckausgleich findet nicht statt.

Durch das Zusammenwirken der Maßnahme nach der Erfindung, insbesondere durch die Schlaucharmierung, durch den gesonderten Schlauchmantel, durch die temperaturangepaßten Materialien, durch die zugfeste Konstruktion und die besonderen gegebenenfalls anzuwendenden Querschnitte (die Lochung kann durch Laser, durch Stanzen, Stechen oder Ultraschall vorgenommen werden) kann die oben genannte Aufgabe voll erfüllt werden.

Die Wandungen sind also teilweise ummantelt, sind außen zugfest. Eine Lochverformung beim Einbringen ist also nicht zu erwarten.

Für den Fachmann wird klar, daß solche Gebilde sich für Aufnahme und Abgabe, insbesondere für in situ-Behandlung eignen. Die Kombination von definiert querschnittsverformten elastischen Innenschläuchen mit oder ohne Armierung und weniger elastischen zugfesten Außenmänteln, die in Längsrichtung offen sind, wird der Innenschlauch gegen Zugverformung und verschmutzung geschützt.

Günstig ist offensichtlich auch die sortenreine Entsorgung durch die getrennten Schläuche, eine Entsorgung, die heute so wichtig wie früher Konstruktionsmerkmale waren, ist.

Wenn vorstehend das Wort "temperaturangepaßt" benutzt wurde, so heißt dies, daß der Kunststoff des Schlauchs, abhängig von der umgebenden Boden- und Wassertemperatur elastisch bleibt (entsprechende Shore-Härte), um eine optimale Regelungswirkung sicherzustellen. Kunststoffe verändern bekanntlich ihre Elastizität bei unterschiedlichen Temperaturen.

Die oben erwähnten konischen Lochungen im Ruhezustand erreicht man, wenn der Schlauch während des Lochungsvorgangs unter Spannung gesetzt wird, dann ein zylindrisches Loch gebohrt wird. Dieses wird dann im Ruhezustand konisch. Sinn dieser Maßnahme ist es, Schmutzpartikel im Ruhezustand nicht ins Innere des Schlauches gelangen zu lassen.

Beispielsweise Ausführungsformen der Erfindung soll nunmehr mit Bezug auf die beiliegenden Zeichnungen näher erläutert werden, in denen
- **Figur 1**: eine erste Ausführungsform,
- **Figur 2**: eine zweite Ausführungsform,
- **Figur 3**: eine dritte Ausführungsform und
- **Figur 4**: eine vierte Ausführungsform zeigen.

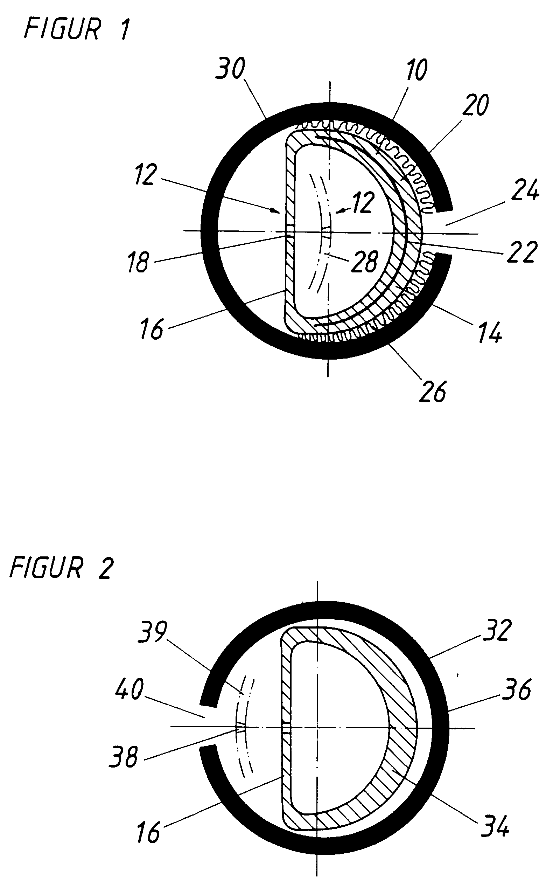

Figur 1 zeigt einen hochelastischen säure-/laugenfesten temperaturangepaßten Innenschlauch 10 mit einer geschlossenen halbkreisförmigen Querschnittsverformung 12, 14, der längs in der flachen Wandseite 16 mit zylindrischen Eintrittsöffnungen 18 versehen ist. In der im Querschnitt runden Wandung 20 ist eine Armierung eingearbeitet, die es verhindert, daß bei der Aufnahme von Flüssigkeiten oder Gasen der Schlauchquerschnitt in sich zusammenfällt. Auf diese Weise wird es möglich, über große Längen bei unterschiedlichen Unterdrücken gleichmäßig Flüssigkeiten oder Gase aufzunehmen. Dieser elastische Innenschlauch 10 wird von einem zugfesten Schlauch als Schutzmantel 30 bzw. Einzugsrohr umhüllt, der oder das über die gesamte Länge offen ist (bei 24). Hierdurch werden die beim Ausbringen von elastischen Schläuchen entstehenden Zugkräfte auf den Innenschlauch 10, die das Material dehnen und beschädigen, kompensiert. Früher wurden hierbei die Öffnungen 18 in der Schlauchwandung 16 verzogen, so daß der Regelmechanismus für gleichmäßige Aufnahme nicht mehr gewährleistet war. Der elastische Innenschlauch 10 wird in das Einzugsrohr 30 so eingelegt, daß die Abflachung 16 mit der Aufnahmeöffnung 18 in der geschlossenen Rundung 20 des Innenschlauches 10 liegt und die armierte halbrunde Seite 20 des elastischen Innenschlauches 10 zur Längsöffnung des Einzugsrohres 30 hin liegt.

Beidseitig des Schlitzes 24 im Einzugsrohr wird zwischen der halbrunden Außenwandung 20 des elastischen Innenschlauches 10 und der Innenwandung des Einzugsrohres 30 Filtermaterial 26 eingebracht, das sowohl die Feinstpartikel daran hindert, an die Aufnahmeöffnung 18 zu gelangen, als auch ein Festsaugen des Innenschlauches 10 am Einzugsrohr 30 vermeidet.

Gestrichelt 28 angedeutet ist die Verformung bei Aufnahme. Man erkennt, daß sich die vorher zylindrische Öffnung 18 verformt, der Querschnitt also vermindert (in einen ellipsenförmigen Querschnitt übergeht bzw. "verlegt") wird (siehe bei 12; 28).

Figur 2 zeigt ein Schlauchsystem 32 von kreisförmigem Querschnitt entsprechend Figur 1, wobei jedoch die oben gezeigte Teilarmierung fehlt. Es handelt sich um einen Innenschlauch 34 für Abgabe. Hier ist darum keine Armierung des elastischen Innenschlauches notwendig, auch kein Filter zwischen den Wänden der Schläuche. Dieser elastische querschnittsverformte Innenschlauch 34 wird mit Hilfe eines zugfesten Einzugsrohres 36 in seine Arbeitsposition gebracht, da sonst das elastische Material gedehnt und/oder beschädigt wird und der Regelmechanismus durch das Verziehen der Austrittsöffnungen 38 nicht mehr gewährleistet ist.

Wichtig ist es, daß der elastische halbkreisförmige Innenschlauch 34 in das Einzugsrohr 36 so eingelegt wird, daß die Austrittsöffnungen 38 auf der gleichen Seite wie die Öffnungen 40 des Einzugsrohres zu liegen kommen. Die Lochungen 38 des Innenschlauches sind also auf die Öffnung 40 des Einzugsrohres ausgerichtet. Auch hier wird durch die gestrichelte Darstellung deutlich, wie bei erhöhtem Innendruck der Innenschlauch 34 gedehnt wird, die Öffnungen 38 also verlegt bzw. im Querschnitt vermindert werden. Dies gleicht einen Druckabfall beispielsweise durch Reibung über große Längen aus.

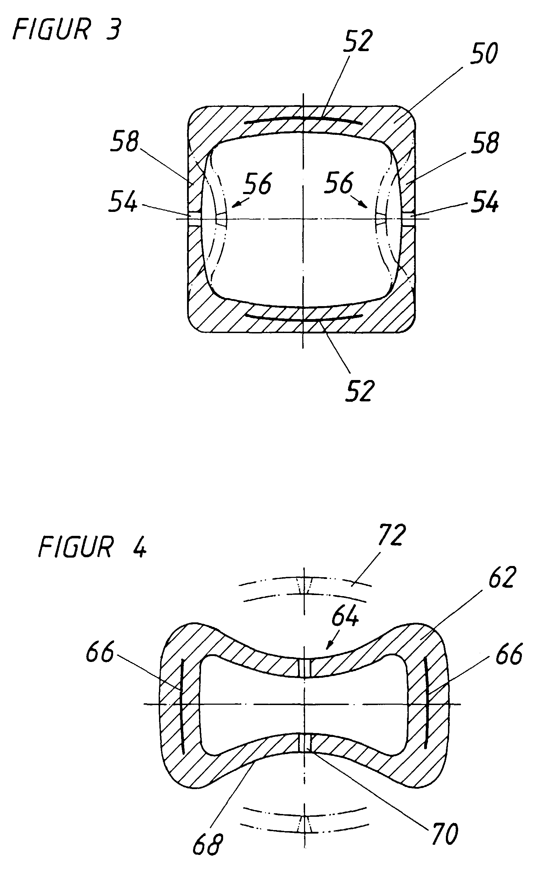

Figur 3 zeigt ein Schlauchsystem 50 zur Aufnahme von flüssigen Chemikalien auf Wasseroberflächen. Ein hochelastischer säure-/laugenfester temperaturangepaßter Schlauch 50, hier mit einem quadratischen Querschnitt, ist vorgesehen. An zwei sich gegenüberliegenden Wandseiten ist der Schlauch bei 52 armiert (gezeigt ist ein dunkles Kreisbogenstück 52) und an den beiden anderen elastischen Seiten längs des Schlauches sind zylindrische Aufnahmeöffnungen 54 vorgesehen. Das Material ist so ausgeprägt, daß der Schlauch 50 an der Wasseroberfläche schwimmt und die Aufnahmeöffnungen 54 die leichteren Chemikalien durch Unterdruck vom Schlauch 50 aufnehmen können.

Diese Konstruktion ist für Abgabe und Aufnahme bestimmt. Gestrichelt (bei 56) ist dies wieder in der Figur selbst dargestellt. Bei Überdruck wird die elastische Wandung 58 gebläht, die Querschnitte der Austrittsöffnungen 54 werden kleiner, bei Normaldruck ist der größte Querschnitt der zylindrischen Öffnung gewährleistet. Bei Unterdruck wird der Querschnitt, wie eingezeichnet, wieder kleiner.

Figur 4 zeigt ein hochelastisches säure-/laugenfestes temperaturangepaßtes Schlauchsystem 62 für die Abgabe von Flüssigkeiten mit einer taillenförmigen Querschnittsverformung 64, das durch seine beidseitige Armierung/Wandverstärkung 66 gegen Zugkräfte beim Auslegen unempfindlich ist. In der Zeichnung ist die Armierung 66 beispielsweise in den kurzen Seiten des rechteckigen Grundkörpers, der abgerundete Ecken und taillenartig eingeschnürte Längsseiten 68 hat, in denen die Öffnungen 70 z.B. zentrisch angebracht sind, als kurzes, dunkel gezeichnetes Kreisbogenstück 66 dargestellt.

Gezeigt ist, wie der Schlauch sich bei Abgabe (es handelt sich um einen Abgabeschlauch) bläht (siehe den Zustand bei 72) und dadurch die Austrittsöffnungen 72 konisch werden und der Öffnungsquerschnitt sich verkleinert.

Überraschend ist es, daß durch die Maßnahme der Erfindung, insbesondere gemäß den Figuren 1 und 3, auch die Aufnahme von Fluiden (etwa von auf dem Wasser treibenden Chemikalien oder im Boden versickerenden Chemikalien) möglich wird.

## Patentansprüche

1. Schlauchsystem bestehend aus
einem elastischen Schlauch (10) von gegenüber den geometrischen Grundformen Kreis, Rechteck ... verformtem Querschnitt, zur gleichmäßigen Abgabe von Flüssigkeiten oder Gasen, über längs des Schlauches und über große Schlauchlängen angeordnete Öffnungen (18) und gegebenenfalls zur Aufnahme von Flüssigkeiten oder Gasen
und aus einem äußeren zugfesten Einzugsrohr (30) nicht-geschlossenen Querschnitts, das insbesondere offen (24) entlang einer Mantellinie ist, für die Unterbringung des elastischen Schlauches (10)
und mit einer teilweisen, elastischen Armierung (22) des Schlauches (10), insbesondere im Bereich der öffnungsfreien Wandungen (14).

2. Schlauchsystem bestehend aus
einem elastischen Schlauch (34) von gegenüber den geometrischen Grundformen Kreis, Rechteck ... verformtem Querschnitt, zur gleichmäßigen Abgabe von Flüssigkeiten oder Gasen, über längs des Schlauches und über große Schlauchlängen angeordnete Öffnungen (18)
und aus einem äußeren zugfesten Einzugsrohr (32) nicht-geschlossenen Querschnitts, das insbesondere offen (40) entlang einer Mantellinie ist, für die Unterbringung des elastischen Schlauches (34).

3. Schlauchsystem (50) bestehend aus
einem elastischen Schlauch von quadratischem oder symmetrischem Querschnitt, zur gleichmäßigen Abgabe und gegebenenfalls zur Aufnahme von Flüssigkeiten oder Gasen, über längs des Schlauches und über große Schlauchlängen angeordnete Öffnungen (54)
und mit einer teilweisen, elastischen Armierung (52) des Schlauches (50), insbesondere im Bereich der öffnungsfreien Wandungen.

4. Schlauchsystem (62) bestehend aus
einem elastischen Schlauch von gegenüber den geometrischen Grundformen Kreis, Rechteck ... verformtem Querschnitt, zur gleichmäßigen Abgabe von Flüssigkeiten oder Gasen, über längs des Schlauches und über große Schlauchlängen angeordnete Öffnungen (70)
und mit einer teilweisen, elastischen Armierung (66) des Schlauches (62), insbesondere im Bereich der öffnungsfreien Wandungen.

5. Schlauchsystem nach Anspruch 1 bis 4, dadurch gekennzeichnet, daß die Ausgangsquerschnitte des elastischen Schlauchs im Ruhezustand halbkreisförmig (10-14), viereckig (50) oder tailliert (52) ausgebildet sind.

6. Schlauchsystem nach Anspruch 4, dadurch gekennzeichnet, daß die Taillierung aus einer flachen abgerundeten (62-72) Querschnittsform mit eingezogenen Längsseiten besteht.

7. Schlauchsystem nach einem der Ansprüche 1 oder 2, dadurch gekennzeichnet, daß die Einzugsrohr-Schlauchanordnung (10, 20; 34, 32) für die gleichmäßige Aufnahme/Abgabe bei "in situ"-Behandlung ausgebildet ist.

8. Schlauchsystem nach Anspruch 1, gekennzeichnet durch ein Filtermaterial (26) zwischen Innenschlauch (10) und Einzugsrohr (30).

9. Schlauchsystem nach Anspruch 8, dadurch gekennzeichnet, daß das Filtermaterial (26) eines für die Aufnahmeöffnungen sonst verstopfenden Feinstpartikel ist.

10. Schlauchsystem nach einem der vorhergehenden Ansprüche, dadurch gekennzeichnet, daß die Öffnungen (18, 54, 70) durch Laser, Stanzen, Stechen oder Ultraschall hergestellt sind.

11. Schlauchsystem nach einem der vorhergenden Ansprüche, dadurch gekennzeichnet, daß die im Ruhezustand zylindrischen Öffnungen (18, 54, 70) des Schlauchsystems bei Verformung aufgrund von Überdruck/Unterdruck im Durchlaßquerschnitt deutlich abnehmen.

12. Schlauchsystem nach einem der vorhergehenden Ansprüche, dadurch gekennzeichnet, daß es aus einem hochelastischen säure-/laugenfesten temperaturangepaßten Material besteht.

13. Schlauchsystem nach Anspruch 1, dadurch gekennzeichnet, daß bei halbkreisförmigem Querschnitt (10) die zylindrischen Öffnungen (18) für die Aufnahme in der flachen Wandseite (16) vorgesehen sind, wobei die Armierung (22) in den runden Querschnitt der Wandung eingearbeitet ist.

14. Schlauchsystem nach Anspruch 13, dadurch gekennzeichnet, daß die Abflachung (16) mit der Aufnahmeöffnung (18) in der geschlossenen Rundung des Einzugsrohres (30) liegt, und die armierte (22) halbrunde Seite des elastischen Innenschlauches (10) zur Längsöffnung (24) dieses Einzugsrohres (30) hin liegt.

15. Schlauchsystem nach Anspruch 3, dadurch gekennzeichnet, daß für die Aufnahme von flüssigen Chemikalien auf Wasseroberflächen der Schlauch (50) mit einem quadratischen Querschnitt, der an zwei gegenüberliegenden Wandseiten armiert (52) ist, ausgebildet ist und an den beiden anderen elastischen Seiten (58) längs des Schlauches zylindrische Aufnahmeöffnungen (54) aufweist, das Material von einer Art derart ist, daß der Schlauch an der Wasseroberfläche schwimmt und die Aufnahmeöffnungen (54) die leichteren Chemikalien durch Unterdruck im Schlauch (50) aufnehmen können.

16. Schlauchsystem nach Anspruch 4, dadurch gekennzeichnet, daß in der Ausbildung als Abgabeschlauch der Schlauch (62) für Flüssigkeiten mit einer taillenförmigen Querschnittsverformung versehen ist und durch eine beidseitige Armierung/Wandverstärkung (66) gegen Zugkräfte beim Auslegen unempfindlich ist.

17. Schlauchsystem nach einem der vorhergehenden Ansprüche, dadurch gekennzeichnet, daß die Öffnungskanäle konisch mit je nach Anwendungsfall von innen nach außen zunehmendem oder abnehmendem Querschnitt ausgebildet sind.

18. Schlauchsystem nach einem der Ansprüche 3 oder 4, dadurch gekennzeichnet, daß für Abgabezwecke die Austrittsstellen (70) in einer konkaven Verformung, für Aufnahmezwecke die Eintrittsöffnungen (54) in einer konvexen Verformung angeordnet sind.

19. Schlauchsystem nach einem der Ansprüche 4 oder 18, dadurch gekennzeichnet, daß ein oder mehrere Öffnungskanäle (70) bei asymmetrischen Schlauchprofilen sich in dem sich verformenden Querschnittssegment (64) befinden.

20. Verfahren zur Abgabe oder Aufnahme von Flüssigkeiten, Gasen oder Fluiden in die oder aus der Umgebung mittels eines Schlauchsystems gemäß Anspruch 1, über diskret in Längsrichtung verteilte Öffnungen, wobei ein Filtermaterial vorgesehen ist, das verhindert, daß Feinstpartikel an die Aufnahmestellen gelangen und ein Festsaugen des Innenschlauchs am Einzugsrohr verhindert und der Innenschlauch mit dem Filtermaterial in ein längs einer Mantellinie offenes Einzugsrohr eingebracht wird und das gesamte Schlauchsystem zur in-situ-Behandlung in den Erdboden eingelegt wird.

21. Verfahren nach Anspruch 20, dadurch gekennzeichnet, daß die Austrittsöffnungen abhängig von steigendem Überdruck bei Abgabe oder Unterdruck bei Aufnahme durch das Betriebsmedium zur Einstellung gleicher Mengen zunehmend durch Krümmungsänderung des elastischen, die Öffnungen tragenden Innenschlauchs verformt bzw. verlegt werden.

22. Verfahren nach Anspruch 21, dadurch gekennzeichnet, daß der mit Öffnungen durchsetzte Innenschlauch in ein gegen Zugspannungen widerstandsfähiges Einzugsrohr eingebracht wird.

23. Verfahren nach einem der Ansprüche 21 oder 22, dadurch gekennzeichnet, daß die Durchmesser der Öffnungen in Abhängigkeit von den Strömungseigenschaften der Fluide und der geforderten Abgabe-/Aufnahmemenge je Zeiteinheit gewählt werden.

24. Anwendung des Schlauchsystems nach einem der Ansprüche 1 bis 19 bzw. des Verfahrens nach einem der Ansprüche 20 bis 23 auf die Bodensanierung.

25. Anwendung des Schlauchsystems nach einem der Ansprüche 1 bis 19 bzw. des Verfahrens nach einem der Ansprüche 20 bis 23 auf die Abgabe/Aufnahme von Wasser und Luft und/oder von flüssigen oder gasförmigen Stoffen.

## Claims

1. Hose system consisting of an elastic hose (10) of a cross-section deformed with regard to the geometric basic shapes circle, rectangle ..., for the uniform discharge of liquids or gases via openings (18) arranged along the hose and arranged over long hose lenghts and for receiving or not of liquids or gases, further consisting of an outer tension resistant draw-in tube (30) of none-closed cross-section, being particularly open (24) along a generatrix and meant for accommodating the elastic hose (10) and providing in part an elastic reinforcement (22) of the hose (10), particularly in the region of the walls (14) where there are no openings.

2. Hose system consisting of an elastic hose (34) having a cross-section deformed with regard to the geometric basic shapes circle, rectangle ..., for the uniform discharge of liquids or gases via openings (18) arranged along the hose and arranged over long hose lenghts and consisting of an outer tension resistant draw-in tube (32) of none-closed cross-section, being particularly open (40) along a generatrix and meant for accommodating the elastic hose (34).

3. Hose system (50) consisting of an elastic hose of square or symmetric cross-section for uniform discharge and possibly for taking up of liquids or gases via openings (54) arranged along the hose and arranged over long hose lenghts and having in part an elastic reinforcement (52) of the hose (50), particularly in the region of the walls where there are no openings.

4. Hose system (62) consisting of an elastic hose of a cross-section deformed with regard to the geometric basic shapes circle, rectangle ..., for the uniform discharge of liquids or gases via openings (70) arranged along the hose and arranged over long hose lenghts and having in part an elastic reinforcement (66) of the hose (62), particularly in the region of the walls where there are no openings.

5. Hose system according to claims 1 to 4, characterized in that the starting cross-sections of the elastic hose in starting condition are semi-circular (10-14), rectangular (50) or waisted (52).

6. Hose system according to claim 4, characterized in that waisting consists of a flat rounded (62-72) cross-section form having drawn-in longitudinal sides.

7. Hose system according to claims 1 or 2, characterized in that the draw-in hose arrangement (10, 20; 34, 32) is adapted for the uniform take-up/discharge during "in situ" treatment.

8. Hose system according to claim 1, characterized by a filter material (26) between the inner hose (10) and the draw-in pipe (30).

9. Hose system according to claim 8, characterized in that the filter material (26) is of a kind used for finest particles otherwise blocking the take-up openings.

10. Hose system according to one of the preceding claims, characterized in that the openings (18, 54, 70) are produced by laser, by stamping, punching or supersonics.

11. Hose system according to one of the preceding claims, characterized in that the openings (18, 54, 70) cylindrical in their starting condition when deformed based on over pressure/under pressure substantially diminish in their passage cross-section.

12. Hose system according to one of the preceding claims, characterized in that it consists of a highly elastic temperature adapted material which is resistant against acids and leaching agents.

13. Hose system according to claim 1, characterized in that the semi-circular cross-section (10) the cylindrical openings (18) for taking up of fluids arranged in the flat side of the wall (16), the reinforcement (22) being incorporated in the round cross-section of the wall.

14. Hose system according to claim 13, characterized in that the flat portion (16) with the take-up opening (18) is arranged in the closed rounding of the take-in pipe (30) and the reinforced halfround side (22) of the elastic inner hose (10) is arranged towards the longitudinal opening (24) of the take-in hose (30).

15. Hose system according to claim 3, characterized in that for the taking up of liquid chemicals on water surfaces the hose (50) provides a square cross-section, which is reinforced in two opposed sides of walls (52) and in the both other elastic sides (58) along the hose provides cylindrical take-up openings (54), the material being of a kind such that the hose floats upon water surfaces and the take-in openings (54) take-up the lighter chemicals by sub-pressure in the hose (50).

16. Hose system according to claim 4, characterized in that in the form of a discharge hose the hose (62) for liquids provides a cross-section deformation of waiste form and that it is unsensible against tension forces by a both side reinforcement/wall reinforcement (66) when laying the hose.

17. Hose system according to one of the preceding claims, characterized in that the channels of the openings are conical and having dependent on the case of use, a cross-section enlarging or diminishing from the inside towards the outside.

18. Hose system according to claims 3 or 4, characterized in that for the purpose of discharge the exit positions (70) are arranged within a concave deformation, for take-up purposes the entrance openings (54) are arranged in a convex deformation.

19. Hose system according to claims 4 or 18, characterized in that one or more channels of the openings (70) with asymmetric hose profiles are found in the cross-section segment (64) which is in the course of being deformed.

20. Method for discharge or take-up of liquids, gases or fluids in or from the environment by means of a hose system according to claim 1 by the way of discrete openings distributed in longitudinal direction, a filter material being arranged preventing that finest particles come to the take-up positions and preventing a clinching of the inner hose upon the draw-in tube and that the inner hose together with the filter material is placed into a draw-in tube open along a sheath line and that the hose system as such for "in-situ" treatment is laid into the ground.

21. Method according to claim 20, characterized in that the exit openings are deformed respectively are obstructed, depending on the increasing over-pressure on discharge, or sub-pressure when taking up, by the function fluid for adjusting equal of amounts by increasingly changing of the curvature of the elastic inner hose carrying the openings.

22. Method according to claim 21, characterized in that the inner hose entered by openings is inserted into a draw-in tube resistant against tensions.

23. Method according to claims 21 or 22, characterized in that the diameters of the openings are chosen dependent on the flow characteristics of the fluids and the required discharge/take-up amount per time unit.

24. Application of the hose system according to one of claims 1 to 19 respectively of the method of one of claims 20 to 23 upon the new eradication of pollution in the ground.

25. Application of the hose system according to one of claims 1 to 19 respectively of the method of one of claims 20 to 23 upon the discharge/take-up of water and air and/or of liquid or gaseous substances.

## Revendications

1. Système de tuyau constitué
d'un tuyau élastique (10) de section transversale déformée par rapport aux formes géométriques de base telles que cercle, rectangle, ..., pour la distribution uniforme de liquides ou de gaz à travers des ouvertures (18) disposées en direction longitudinale du tuyau et sur des longueurs de tuyau importantes, et, le cas échéant, pour la réception de liquides ou de gaz,
et d'un tube (30) extérieur de rentrage résistant à la traction et de section transversale non-fermée, qui est en particulier ouvert (24) le long d'une génératrice, pour loger le tuyau (10) élastique,
et avec une armature partielle élastique (22) du tuyau (10), en particulier dans la zone des parois (14) dépourvues d'ouvertures.

2. Système de tuyau constitué
d'un tuyau élastique (34) de section transversale déformée par rapport aux formes géométriques de base telles que cercle, rectangle, ..., pour la distribution uniforme de liquides ou de gaz à travers des ouvertures (18) disposées en direction longitudinale du tuyau et sur des longueurs de tuyau importantes,
et d'un tube (32) extérieur de rentrage résistant à la traction et de section transversale non-fermée, qui est en particulier ouvert (40) le long d'une génératrice pour loger le tuyau élastique (34).

3. Système de tuyau (50) constitué
d'un tuyau élastique de section carrée ou symétrique pour la distribution uniforme et, le cas échéant, pour la réception de liquides ou de gaz, à travers des ouvertures (54) disposées en direction longitudinale du tuyau et sur des longueurs de tuyau importantes,
et avec une armature (52) partielle élastique du tuyau (50), en particulier dans la zone des parois dépourvues d'ouvertures.

4. Système de tuyau (62) constitué
d'un tuyau élastique de section transversale déformée par rapport aux formes géométriques de base telles que cercle, rectangle, ..., pour la distribution uniforme de liguides ou de gaz à travers des ouvertures (70) disposées en direction longitudinale du tuyau et sur des longueurs de tuyau importantes,
et avec une armature (66) partielle élastique du tuyau (62), en particulier dans la zone des parois dépourvues d'ouvertures.

5. Système de tuyau selon les revendications 1 à 4, caractérisé par le fait que les sections de sortie du tuyau élastique à l'état de repos sont en demi-cercle (10-14), quadrangulaires (50) ou comportent une contraction (52).

6. Système de tuyau selon la revendication 4, caractérisé par le fait que la contraction est constituée par une forme de section plane arrondie (62-72) avec des côtés longitudinales rentrés.

7. Système de tuyau selon l'une des revendications 1 ou 2, caractérisé par le fait que la disposition tube de rentrage/tuyau (10, 20; 34, 32) est conformée pour la réception/distribution uniforme lors d'un traitement "in situ".

8. Système de tuyau selon la revendication 1, caractérisé par un matériau filtrant (26) entre le tuyau intérieur (10) et le tube de rentrage (30).

9. Système de tuyau selon la revendication 8, caractérisé par le fait que le matériau filtrant (26) est un matériau de protection contre les particules ultra fines autrement obstruant les ouvertures de réception.

10. Système de tuyau selon l'une des revendications précédentes, caractérisé par le fait que les ouvertures (18, 54, 70) sont réalisées par traitement laser, poinçonnage, perçage ou ultrason.

11. Système de tuyau selon l'une des revendications précédentes, caractérisé par le fait que les ouvertures (18, 54, 70) du système de tuyau, qui sont cylindriques à l'état de repos, diminuent sensiblement de section de passage lors d'une déformation à cause d'une surpression/dépression.

12. Système de tuyau selon l'une des revendications précédentes, caractérisé par le fait qu'il est constitué d'un matériau hautement élastique résistant aux acides et aux lessives alcalines et adapté à la température.

13. Système de tuyau selon la revendication 1, caractérisé par le fait qu'avec une section transversale en demi-cercle (10) les ouvertures cylindriques (18) pour la réception sont prévues dans le côté plan (16) de la paroi, l'armature (22) étant prévue dans la section transversale arrondie de la paroi.

14. Système de tuyau selon la revendication 13, caractérisé par le fait que la partie aplatie (16) avec l'ouverture de réception (18) se trouve dans l'arrondi fermé du tube de rentrage (30) et que la partie armée (22) en demi-cercle du tuyau intérieur élastique (10) est disposée en direction de l'ouverture (24) longitudinale de ce tube de rentrage (30).

15. Système de tuyau selon la revendication 3, caractérisé par le fait que pour la réception de produits chimiques liquides sur des surfaces d'eau le tuyau (50) est conformé à section transversale carrée qui est armée sur deux côtés (52) opposés et qui comprend sur les deux autres côtés élastiques (58) le long du tuyau des ouvertures de réception cylindriques (54), le matériau étant d'un type tel que le tuyau nage à la surface de l'eau et que les ouvertures de réception (54) peuvent recevoir par dépression dans le tuyau (50) les matières chimiques plus légères.

16. Système de tuyau selon la revendication 4, caractérisé par le fait que dans la conformation en tant que tuyau de distribution le tuyau (62) pour liquides est prévu d'une déformation de la section transversale en forme de contraction et qu'il est rendu insensible vis à vis de forces de traction se manifestant lors de la pose à l'aide d'une armature/renforcement de paroi (66) bilatérale.

17. Système de tuyau selon l'une des revendications précédentes, caractérisé par le fait que les canaux d'ouverture sont coniques avec, selon le cas d'application, une section transversale croissante ou décroissante de l'intérieur à l'extérieur.

18. Système de tuyau selon l'une des revendications 3 ou 4, caractérisé par le fait que, aux fins d'une distribution, les endroits de sortie (70) sont disposés dans une déformation concave, et aux fins d'une réception, les ouvertures d'entrée (54) sont disposées dans une déformation convexe.

19. Système de tuyau selon l'une des revendications 4 ou 18, caractérisé par le fait que pour des profils de tuyau asymétriques, un ou plusieurs canaux d'ouverture (70) sont disposés dans le segment de section transversale (64) se déformant.

20. Procédé pour la distribution ou la réception de liquides, gaz ou fluides dans l'environnement respectivement de l'environnement à l'aide d'un système de tuyau selon la revendication 1, au moyen d'ouvertures discrètement réparties en direction longitudinale, un matériau filtrant étant prévu qui empêche que des particules ultra fines parviennent aux endroits de réception et qui empêche une fixation par succion du tuyau interne au tube de rentrage, le tuyau interne étant introduit avec le matériau filtrant dans un tube de rentrage ouvert le long d'une génératrice, et le système de tuyau complet étant disposé dans le sol pour le traitement in situ.

21. Procédé selon la revendication 20, caractérisé par le fait qu'en fonction d'une surpression croissante lors de la distribution ou d'une dépression lors de la réception créée par le moyen de fonctionnement pour le réglage de quantités identiques, les ouvertures de sortie sont progressivement déformées respectivement obstruées par la variation croissante de la courbure du tuyau interne élastique portant les ouvertures.

22. Procédé selon la revendication 21, caractérisé par le fait que le tuyau interne percé d'ouvertures est introduit dans un tube de rentrage résistant à la traction.

23. Procédé selon l'une des revendications 21 ou 22, caractérisé par le fait que les diamètres des ouvertures sont choisis en fonction des qualités d'écoulement des fluides et de la quantité requise de distribution/réception par unité de temps.

24. Utilisation du système de tuyau selon l'une des revendications 1 à 19 respectivement du procédé selon l'une des revendications 20 à 23 pour l'assainissement des sols.

25. Utilisation du système de tuyau selon l'une des revendications 1 à 19 respectivement du procédé selon l'une des revendications 20 à 23 pour la distribution/réception d'eau et d'air et/ou de matières liquides ou gazeuses.
